# EUROPÄISCHE PATENTSCHRIFT

(11) **EP 1 267 458 B1**
(45) Veröffentlichungstag und Bekanntmachung des Hinweises auf die Patenterteilung: **17.03.2004**
(21) Anmeldenummer: 01113604.1
(22) Anmeldetag: 15.06.2001
(51) Int. Cl.: H01S 3/02, G01M 11/04

(54) **Lagerfuss und -vorrichtung, insbesondere für einen Laserresonator**
Support base and device, especially for a laser resonator
Dispositif et support adapté en particulier à un resonateur laser

(43) Veröffentlichungstag der Anmeldung: 18.12.2002
(73) Patentinhaber: TRUMPF LASERTECHNIK GmbH, D-71254 Ditzingen (DE)
(72) Erfinder: Häcker, Michael, 71299 Wimsheim (DE); Andreasch, Wolfgang, Dr., 71384 Weinstadt (DE)
(74) Vertreter: KOHLER SCHMID + PARTNER

(56) Entgegenhaltungen:
- DE-A- 3 234 618
- US-A- 5 317 875
- US-A- 5 694 814

## Beschreibung

Die Erfindung betrifft einen Lagerfuß, insbesondere für einen Laserresonator, mit mindestens zwei Fußabschnitten und jeweils einem dazwischen vorgesehenen Kippgelenk sowie eine entsprechende Lagervorrichtung mit solchen Lagerfüßen.

Um die z.B. aufgrund von Temperaturänderungen oder Beschleunigungen auftretenden horizontalen Verlagerungen eines Laserresonators in allen Richtungen zuzulassen, ist bei einer bekannten Lagervorrichtung der Laserresonator an drei Lagerfüßen, nämlich über ein vierwertiges Lager, ein dreiwertiges Lager und ein zweiwertiges Lager, mit einer Grundplatte verbunden. Das vierwertige Lager wird als Festlager bezeichnet und besitzt zwei rotatorische und keinen translatorischen Freiheitsgrad. Das dreiwertige Lager mit zwei rotatorischen und einem translatorischen Freiheitsgrad wird als eindimensionales Loslager bezeichnet und das zweiwertige Lager mit zwei rotatorischen und zwei translatorischen Freiheitsgraden als zweidimensionales Loslager. Das Festlager ist durch einen am Resonatorrahmen vorgesehenen, nach unten offenen Kegel gebildet, in dem eine Lagerkugel verkippbar, aber in der Lagerebene unverschiebbar gelagert ist. Das eindimensionale Loslager ist durch eine am Resonatorrahmen vorgesehene, nach unten offene V-Nut gebildet, in der eine Lagerkugel verkippbar und linear verschiebbar gelagert ist. Das zweidimensionale Loslager ist durch eine plane Lagerfläche am Resonatorrahmen gebildet, auf der eine Lagerkugel frei verschiebbar aufliegt. In allen drei Lagern ist aufgrund der Kugeloberfläche die allseitige Verkippung der Lagerkugeln möglich.

Die bekannte Lagervorrichtung weist an jedem ihrer drei Lagerfüße zusätzlich eine Höhensicherung auf, um beim Transport des Laserresonators ein Abheben und ein Herausspringen des Laserresonators zu verhindern. Die Höhensicherung besteht aus einer zwischen Lagerkugel und Lagerfläche ausgebildeten Schraubverbindung. Der Laserresonator darf nur mit gelöster Transportsicherung betrieben werden, aber teilweise wird vergessen, die Höhensicherung nach dem Transport wieder zu lösen, so daß hier Fehler auftreten.

Demgegenüber ist es die Aufgabe der Erfindung, einen Lagerfuß der eingangs genannten Art derart zu verbessern, daß der Lagerfuß möglichst einfach und leicht höhengesichert ist, sowie eine entsprechende Lagervorrichtung bereitzustellen.

Diese Aufgabe wird erfindungsgemäß, wie in Anspruch 1 definiert, dadurch gelöst, daß benachbarte Fußabschnitte jeweils unmittelbar über das Kippgelenk unverlierbar miteinander verbunden sind, und das mindestens eine Kippgelenk als allseitig kippbares Federgelenk mit mindestens zwei gegeneinander, insbesondere um 90°, verdreht angeordneten Kippachsen ausgebildet ist. Wenn alle Kippachsen in einer Ebene angeordnet sind, ermöglicht dieses allseitig kippbare Federgelenk nur ein Verkippen seiner beiden Fußabschnitte gegeneinander, aber keine seitliche Relativverschiebung. Der Lagerfuß bildet, da er in der Lagerebene keinen translatorischen Freiheitsgrad besitzt, ein Festlager.

In einer ersten Weiterbildung dieser Ausführungsform weist das Kippgelenk einen zentralen Federsteg auf, der gegenüber seinen beiden benachbarten Fußabschnitten jeweils so weit zurückspringt, daß eine elastische allseitige Verkippung der beiden Fußabschnitte gegeneinander ermöglicht wird.

Der wesentliche Vorteil der Erfindung besteht darin, daß eine zusätzliche Höhensicherung am Lagerfuß nicht erforderlich ist, sondern jeweils zwei Fußabschnitte des Lagerfußes durch ein Kippgelenk bereits höhengesichert aneinander gehalten sind. Dadurch kann der Laserresonator auch vertikal, um 180° gedreht oder in jeder anderen beliebig gedrehten Ebene gelagert werden.

In einer ganz besonders bevorzugten Ausführungsform der Erfindung sind benachbarte Fußabschnitte durch das Kippgelenk jeweils einstückig bzw. materialschlüssig miteinander verbunden, so daß der Lagerfuß als Festkörpergelenk ausgebildet ist.

In einer anderen Ausführungsform ist der Lagerfuß aus mehreren Einzelteilen aufgebaut. Zum Beispiel kann der Lagerfuß aus zwei jeweils um 90° gegeneinander verdreht angeordneten, identischen Hälften zusammengesetzt sein, die sich besonders kostengünstig als Strangpreßprofil herstellen lassen.

In einer anderen zweiten Weiterbildung ist das allseitig kippbare Kippgelenk als Kardanfedergelenk ausgebildet. Dazu sind die beiden Kippachsen des Kippgelenks durch zwei gegeneinander, insbesondere um 90°, verdreht angeordnete, durchgehende oder unterteilte Federstege gebildet. Jede beliebige Verkippung der beiden benachbarten Fußabschnitte des Kippgelenks gegeneinander läßt sich durch Verkippung um einen oder gleichzeitig um beide Federstege erreichen. Die beiden Federstege können, wenn sie in einer Ebene angeordnet sind, als Kreuzfedersteg ausgebildet sein.

Wenn der Lagerfuß beabstandet zum allseitig kippbaren Kippgelenk noch ein um nur eine Kippachse, d.h. zweiseitig, kippbares Kippgelenk aufweist, ist durch Verkippen um beide Kippgelenke eine seitliche Parallelverschiebung von Fußabschnitten des Lagerfußes möglich. Die damit gleichzeitig verbundene Höhenverschiebung hat bei den auftretenden Größen einen vernachlässigbaren Einfluss. Der Lagerfuß bildet, da er seitlich einen translatorischen Freiheitsgrad besitzt, ein eindimensionales Loslager. Insbesondere bei einstückiger Ausbildung des Lagerfußes kann das zweiseitige Kippgelenk als Federgelenk mit mindestens einem die Kippachse definierenden, durchgehenden oder unterteilten Federsteg ausgebildet sein.

Wenn der Lagerfuß zwei übereinander angeordnete, allseitig kippbare Federgelenke aufweist, ist eine Parallelverschiebung von Fußabschnitten des Lagerfußes in allen seitlichen Richtungen möglich. Der Lagerfuß bildet, da er seitlich zwei translatorische Freiheitsgrade besitzt, ein zweidimensionales Loslager.

Im einfachsten Fall ist ein Federsteg durch zwei einander gegenüberliegende seitlich offene Schlitze gebildet. Der Lagerfuß kann auch zunächst mit Schlitzen gefertigt werden, die nach außen geschlossen sind und die dann je nach Anwendungsfall nachträglich nach außen geöffnet werden. Alternativ kann der Lagerfuß auch zunächst mit offenen Schlitzen gefertigt werden, die dann je nach Anwendungsfall geschlossen werden.

Der Lagerfuß kann, insbesondere bei einstückiger Ausbildung, massiv oder als Hohlkörper ausgebildet sein, wobei im letzteren Fall gerade in Gelenkbereichen geeignete Versteifungen erforderlich sein können. Auch eine Ausbildung des Lagerfußes als einstückiges Gußteil ist möglich.

Die Erfindung betrifft auch eine Lagervorrichtung, insbesondere als Unterbau für einen Laserresonator, mit mindestens drei Lagerfüßen, wie sie oben beschrieben sind.

In einer bevorzugten Ausführungsform umfaßt die erfindungsgemäße Lagervorrichtung drei Lagerfüße, die jeweils auf gleicher Höhe ein allseitig kippbares Kippgelenk haben, wobei ein Lagerfuß zusätzlich ein zweiseitig kippbares Kippgelenk und ein anderer Lagerfuß zusätzlich ein weiteres allseitig kippbares Kippgelenk aufweisen.

Die verschiedenen Lagerfüße können kostengünstig aus jeweils identischen Grundkörpern aus z.B. Aluminium einstückig hergestellt werden, aus denen durch Nachbearbeitung, z.B. Öffnen von Verbindungsstegen durch Fräsen oder Schließen von Schlitzen durch Schweißen, die verschiedenen-Lagerfüße hergestellt werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: ein erstes Ausführungsbeispiel der erfindungsgemäßen Lagervorrichtung mit drei jeweils einstückig ausgebildeten Lagerfüßen als Unterbau für einen Laserresonator;
- Fig. 2: einen als Festlager ausgebildeten Lagerfuß der in Fig. 1 gezeigten Lagervorrichtung;
- Fig. 3: einen als eindimensionales Loslager ausgebildeten Lagerfuß der in Fig. 1 gezeigten Lagervorrichtung;
- Fig. 4: einen als zweidimensionales Loslager ausgebildeten Lagerfuß der in Fig. 1 gezeigten Lagervorrichtung;
- Fig. 5: ein zweites Ausführungsbeispiel der erfindungsgemäßen Lagervorrichtung mit drei jeweils einstückig ausgebildeten Lagerfüßen;
- Fig. 6: einen als Festlager ausgebildeten Lagerfuß der in Fig. 5 gezeigten Lagervorrichtung;
- Fig. 7: einen als eindimensionales Loslager ausgebildeten Lagerfuß der in Fig. 5 gezeigten Lagervorrichtung;
- Fig. 8: einen als zweidimensionales Loslager ausgebildeten Lagerfuß der in Fig. 5 gezeigten Lagervorrichtung;
- Fig. 9: einen als einstückiges Gußteil ausgebildeten Lagerfuß eines dritten Ausführungsbeispiels der erfindungsgemäßen Lagervorrichtung; und
- Fig. 10: einen als Festlager ausgebildeten, zweistückigen Lagerfuß eines vierten Ausführungsbeispiels im zusammengebauten Zustand (Fig. 10a) und im zerlegten Zustand (Fig. 10b);
- Fig. 11: ein fünftes Ausführungsbeispiel der erfindungsgemäßen Lagervorrichtung mit drei jeweils einstückig ausgebildeten Lagerfüßen; und
- Fig. 12: ein Beispiel einer Lagervorrichtung mit drei jeweils mit Kardangelenken versehenen Lagerfüßen.

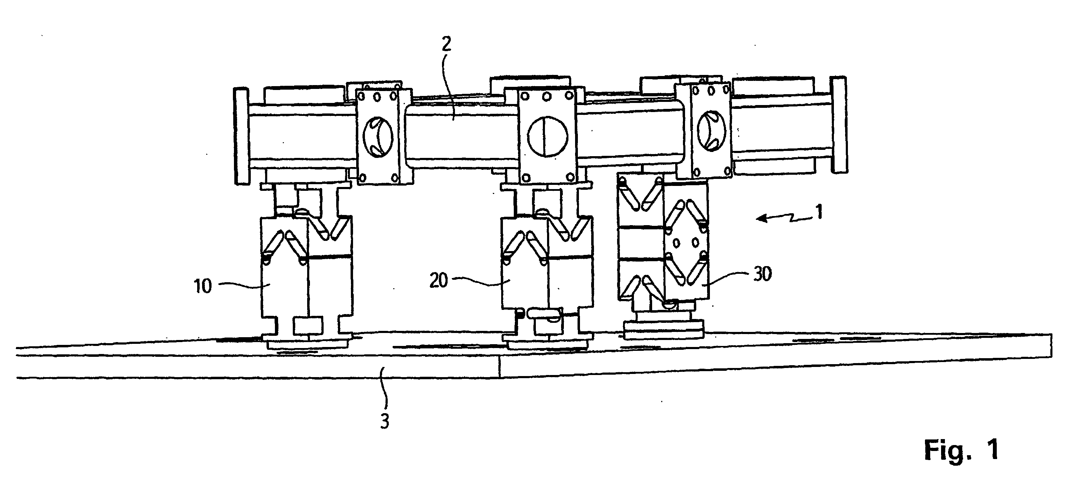

Die in **Fig. 1** gezeigte Lagervorrichtung **1** für einen quadratisch gefalteten Laserresonator umfaßt drei auf einer Grundplatte **3** befestigte einstückige Lagerfüße 10, 20, 30, auf denen der Resonatorrahmen **2** aufliegt. Der Lagerfuß 10 entspricht funktionsmäßig einem Festlager, der Lagerfuß 20 einem eindimensionalen Loslager und der Lagerfuß 30 einem zweidimensionalen Loslager.

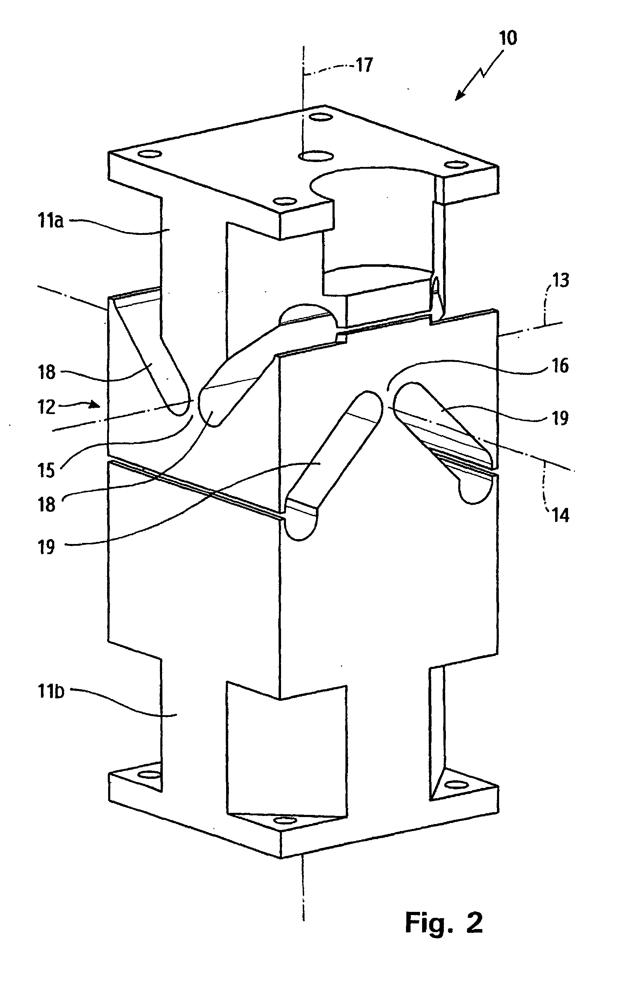

Der in **Fig. 2** gezeigte Lagerfuß 10 umfaßt einen oberen Fußabschnitt **11a,** auf dem der Laserresonator 2 befestigt ist, und einen unterseitig auf der Grundplatte 3 befestigten unteren Fußabschnitt **11b**. Die beiden Fußabschnitte 11a, 11b sind durch ein allseitig verkippbares Federgelenk **12** einstückig miteinander verbunden. Das Federgelenk 12 hat zwei horizontale Kippachsen **13, 14,** die gegeneinander um 90° verdreht angeordnet sind und sich im gezeigten Ausführungsbeispiel schneiden. Die Kippachsen 13, 14 sind jeweils durch unterbrochene Federstege 15, 16 definiert, die durch zwei einander gegenüberliegende, quer zur Längsachse 17 des Lagerfußes 10 verlaufende, seitlich offene Schlitze 18 bzw. 19 gebildet sind. Dabei erstrecken sich die Schlitze 18 ausgehend vom Federsteg 15 schräg nach oben und die Schlitze 19 ausgehend vom Federsteg 16 schräg nach unten. Die beiden Federstege 15, 16 bilden in der durch die beiden Kippachsen 13, 14 aufgespannten Ebene einen Kreuzfedersteg. Die allseitige Verkippung des oberen Fußabschnitts 11a gegenüber dem unteren Fußabschnitt 11b ist durch Verkippung um einen Federsteg oder durch überlagerte Verkippung um beide Federstege 15, 16 möglich. Das Federgelenk 12 bildet somit ein allseitig kippbares Festkörpergelenk und der Lagerfuß 10, da er in der Horizontalebene keinen translatorischen Freiheitsgrad hat, somit ein Festlager.

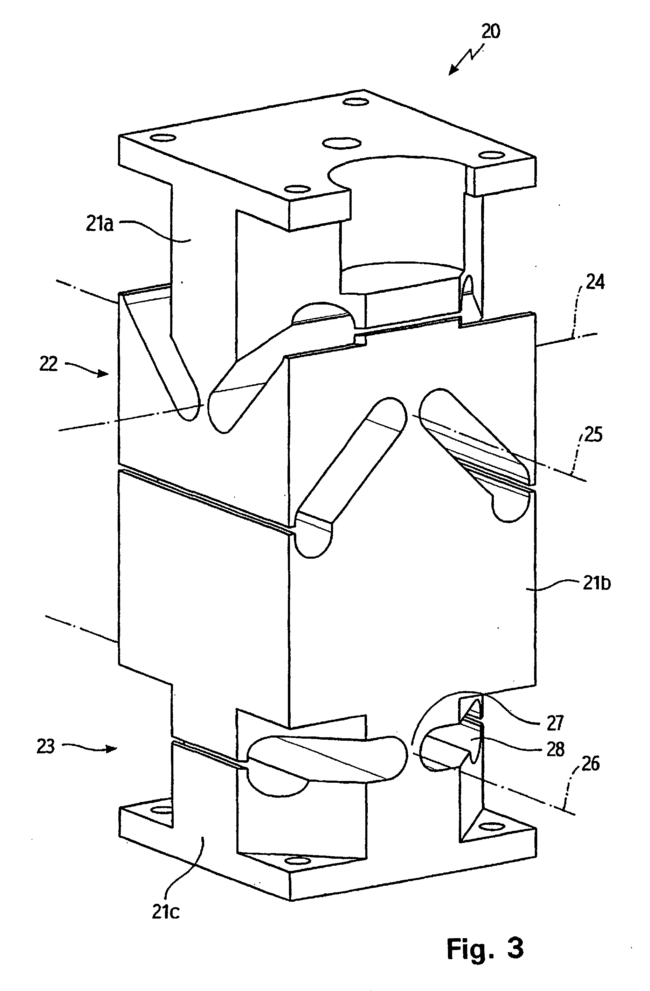

Der in **Fig. 3** gezeigte Lagerfuß 20 umfaßt drei Fußabschnitte **21a, 21b, 21c**, wobei die beiden Fußabschnitte 21a, 21b durch ein allseitig kippbares oberes Federgelenk **22** und die beiden Fußabschnitte 21b, 21c durch ein zweiseitig kippbares unteres Federgelenk **23** einstückig miteinander verbunden sind. Das Federgelenk 22 mit zwei Kippachsen **24, 25** ist identisch dem Federgelenk 12 des Lagerfußes 10 aufgebaut. Die Kippachse **26** des zweiseitig kippbaren Federgelenks 23 ist durch einen durchgehenden Federsteg 27 definiert, der durch zwei einander gegenüberliegende horizontale, seitlich offene Schlitze 28 gebildet ist, und verläuft parallel zur Kippachse 25. Durch diese beiden parallelen Kippachsen 25, 26 ist eine Parallelverschiebung des oberen Fußabschnitts 21a gegenüber dem unteren Fußabschnitt 21c in einer horizontalen Richtung (d.i. rechtwinklig zu den Kippachsen 25, 26) möglich, nämlich wenn der obere Fußabschnitt 21a um die Kippachse 25 in entgegengesetzter Richtung verkippt als der mittlere Fußabschnitt 21b um die Kippachse 26. Der Lagerfüß 20 bildet, da er in der Horizontalebene einen translatorischen Freiheitsgrad hat, somit ein eindimensionales Loslager.

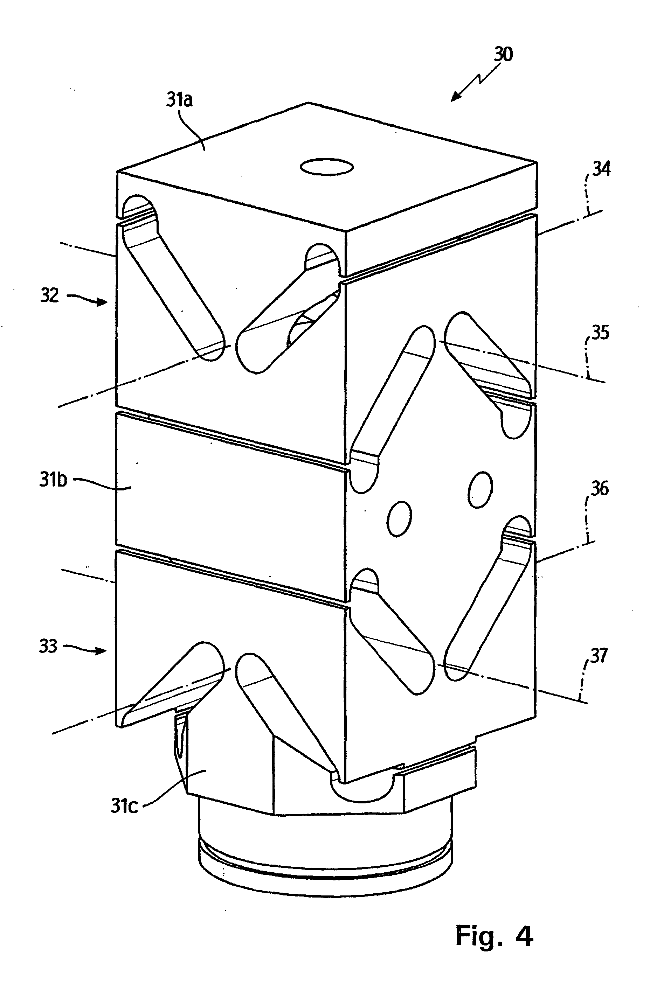

Der in **Fig. 4** gezeigte Lagerfuß 30 umfaßt drei Fußabschnitte **31a, 31b, 31c,** wobei die beiden Fußabschnitte 31a, 31b und die beiden Fußabschnitte 31b, 31c jeweils durch ein allseitig kippbares Federgelenk **32, 33** einstückig miteinander verbunden sind. Die beiden Federgelenke 32, 33 mit ihren jeweiligen Kippachsen **34, 35** bzw. **36, 37** sind identisch dem Federgelenk 12 des Lagerfußes 10 aufgebaut und bezüglich einer horizontalen Mittelebene des Lagerfußes 30 spiegelbildlich angeordnet. Durch die jeweils parallelen Kippachsen 34, 36 und 35, 37 der beiden Federgelenke 32, 33 ist eine Parallelverschiebung des oberen Fußabschnitts 31a gegenüber dem unteren Fußabschnitt 31c in jeder horizontalen Richtung möglich, nämlich wenn der obere Fußabschnitt 31a um die Kippachsen **34, 35** in jeweils entgegengesetzter Richtung verkippt wie der mittlere Fußabschnitt 31b um die Kippachsen 36, 37.. Der Lagerfuß 30 bildet, da er in der Horizontalebene zwei translatorische Freiheitsgrade hat, somit ein zweidimensionales Loslager.

Die Lagerfüße 10, 20, 30 haben eine im wesentlichen quader- bzw. würfelförmige Außenkontur und sind aus identischen massiven Grundkörpern hergestellt. Dieser Grundkörper kann beispielsweise ein Aluminium-Gußteil sein, aus dem durch Nachbearbeitung, z.B. Öffnen von Verbindungsstegen durch Fräsen oder Schließen von Schlitzen durch Schweißen, die verschiedenen Festkörpergelenke der Lagerfüße hergestellt werden.

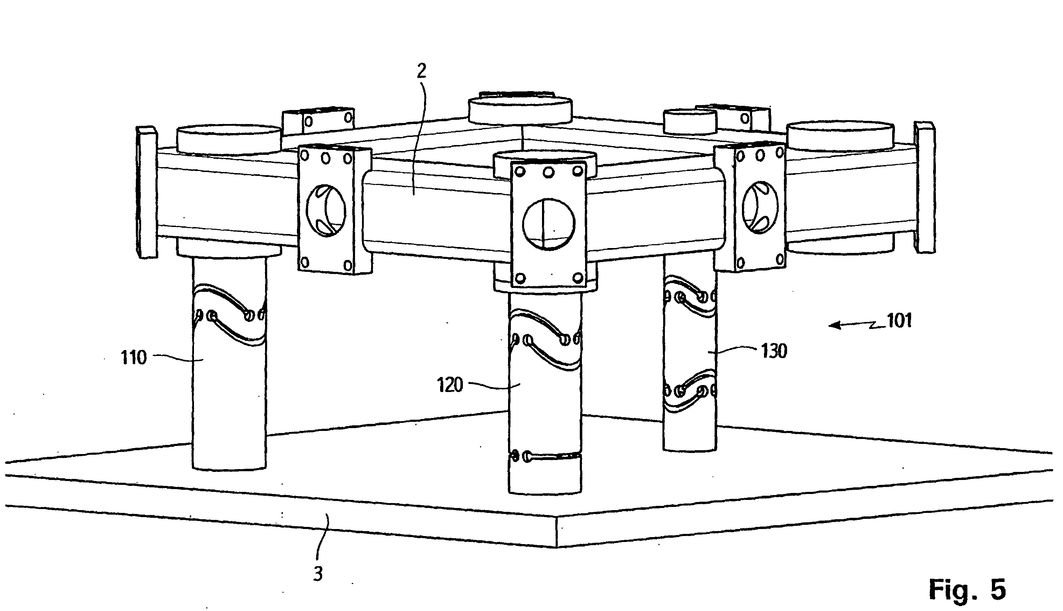

Von der Lagervorrichtung 1 der Fig. 1 unterscheidet sich die in **Fig. 5** gezeigte Lagervorrichtung **101** dadurch, daß ihre drei Lagerfüße **110, 120, 130** nicht als quaderförmige Massivkörper, sondern als runde Rohrkörper ausgebildet sind. Der einstückige Lagerfuß 110 entspricht funktionsmäßig einem Festlager, der einstückige Lagerfuß 120 einem eindimensionalen Loslager und der einstückige Lagerfuß 130 einem zweidimensionalen Loslager. Alternativ können auch zylinderförmige oder andere Hohlkörper verwendet werden.

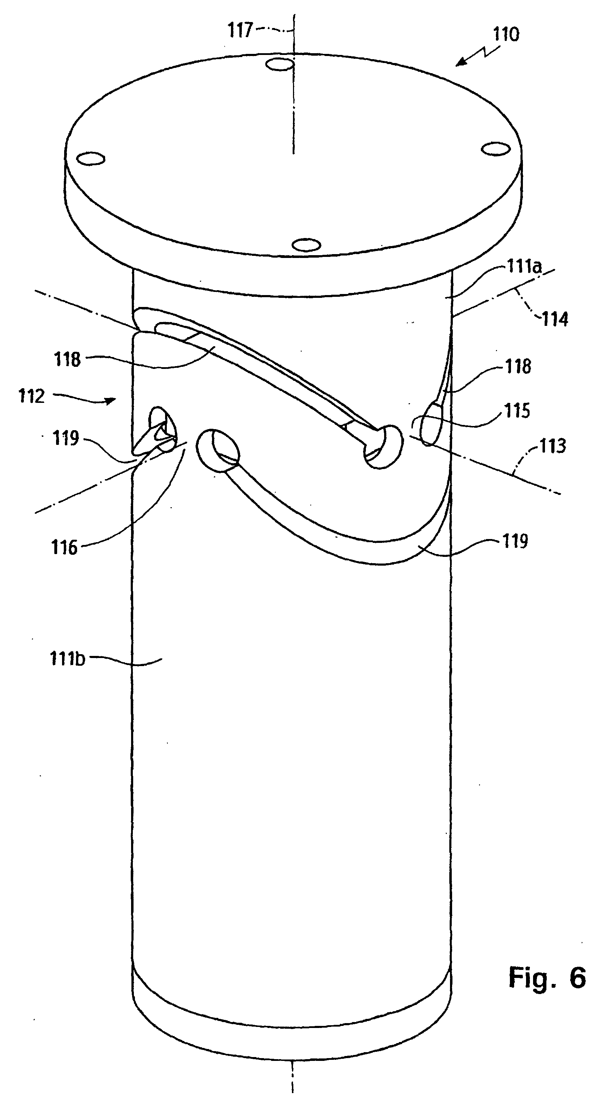

Analog dem Lagerfuß 10 weist der in Fig. **6** gezeigte Lagerfuß 110 ein allseitig kippbares Federgelenk **112** mit zwei Kippachsen **113, 114** auf, durch das die beiden Fußabschnitte **111a, 111b** einstückig miteinander verbunden sind. Jede Kippachse 113, 114 ist jeweils durch zwei einander gegenüberliegende Federstege **115** bzw. **116** in der Rohrwand definiert, von denen in Fig. 6 jeweils nur die vorderseitigen dargestellt sind. Die zwei einander gegenüberliegenden Federstege 115, 116 sind durch jeweils zwei schräg zur Längsachse **117** des Lagerfußes 110 verlaufende seitlich offene Schlitze **118** bzw. **119** gebildet, wobei sich die Schlitze 118 ausgehend von den Federstegen 115 schräg nach oben und die Schlitze 119 ausgehend von den Federstegen 116 schräg nach unten erstrecken. Die beiden Kippachsen 113, 114 sind gegeneinander um 90° verdreht und schneiden sich im gezeigten Ausführungsbeispiel. Entsprechend dem Lagerfuß 10 bildet der Lagerfuß 110 das Festlager der Lagervorrichtung 101.

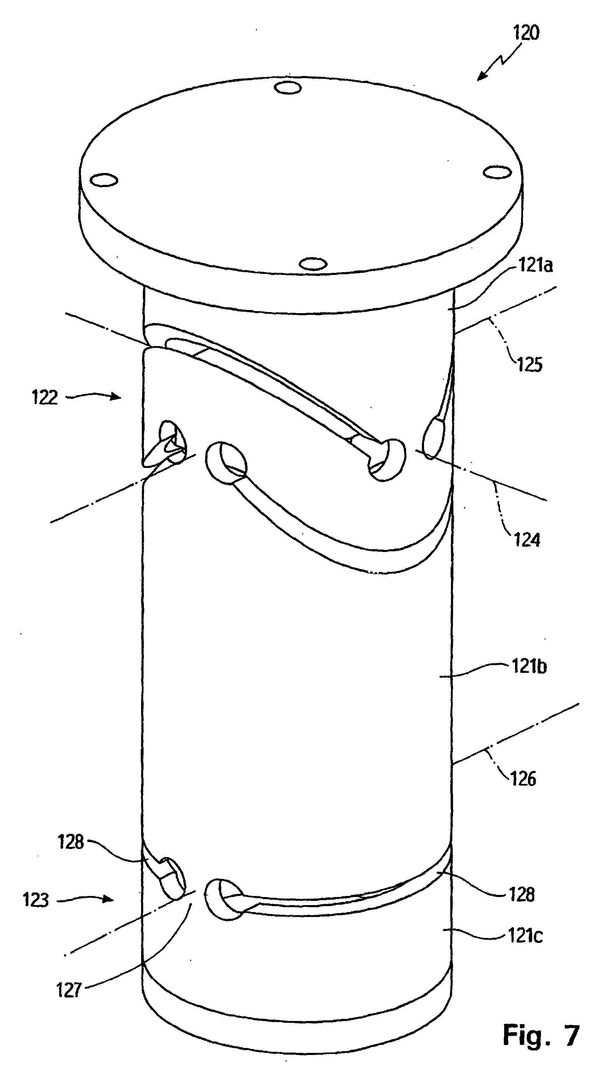

Analog dem Lagerfuß 20 umfaßt der in Fig. **7** gezeigte Lagerfuß 120 ein allseitig kippbares Federgelenk **122** und ein zweiseitig kippbares Federgelenk **123,** welche die beiden Fußabschnitte **121a, 121b** und die beiden Fußabschnitte 121b, 121c miteinander jeweils einstückig verbinden. Das Federgelenk 122 mit den beiden Kippachsen **124, 125** ist identisch dem Federgelenk 112 des Lagerfußes 110 aufgebaut. Die parallel zur Kippachse 125 verlaufende Kippachse **126** des zweiseitig kippbaren Federgelenks **123** ist durch zwei einander gegenüberliegende Federstege **127** in der Rohrwand definiert, von denen in Fig. 7 nur der vorderseitige dargestellt ist. Diese beiden einander gegenüberliegenden Federstege **127** sind durch zwei horizontale, offene Schlitze **128** gebildet. Entsprechend dem Lagerfuß 20 bildet der Lagerfuß 120 das eindimensionale Loslager der Lagervorrichtung 101.

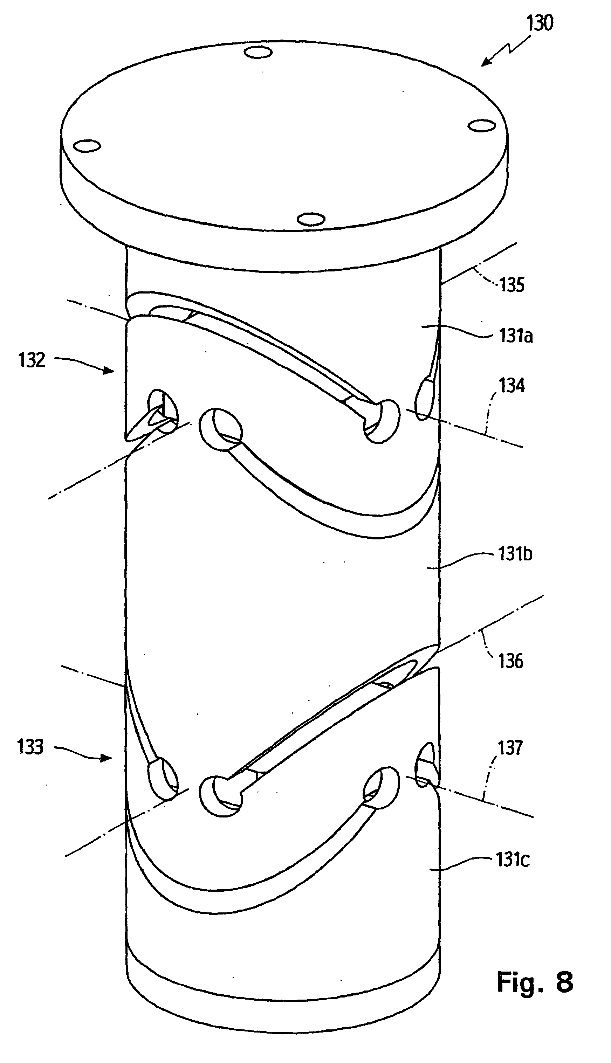

Analog dem Lagerfuß 30 umfaßt der in Fig. **8** gezeigte Lagerfuß 130 ein oberes und ein unteres allseitig kippbares Federgelenk **132, 133,** welche zwei benachbarte Fußabschnitte **131a, 131b** bzw. **131b**, **131c** miteinander jeweils einstückig verbinden. Die beiden Federgelenke 132, 133 mit ihren jeweiligen Kippachsen **134, 135** und **136, 137** sind identisch dem Federgelenk 112 des Lagerfußes 110 aufgebaut. Entsprechend dem Lagerfuß 30 bildet der Lagerfuß 130 das zweidimensionale Loslager der Lagervorrichtung 101.

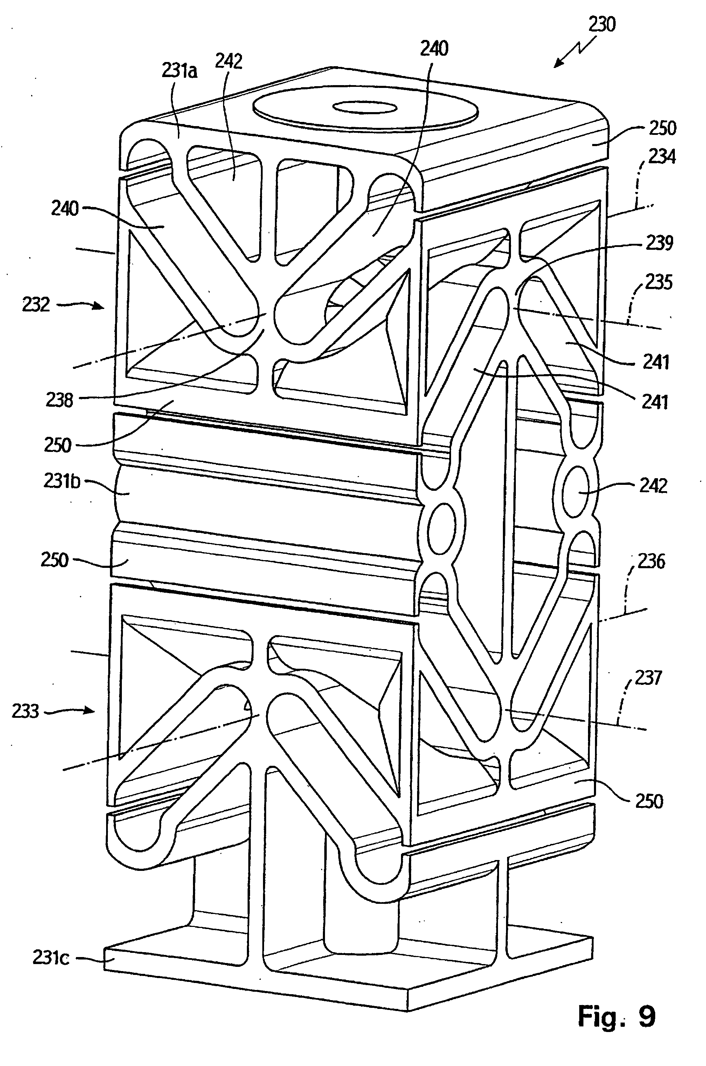

Der in **Fig. 9** gezeigte Lagerfuß **230** ist als Aluminium-Gußteil ausgebildet und weist ein oberes und ein unteres allseitig kippbares Federgelenk **232, 233** auf, durch das die beiden Fußabschnitte **231a, 231b** bzw. die beiden Fußabschnitte 231b, 231c des Lagerfußes 230 jeweils einstückig miteinander verbunden sind. Die beiden Federgelenke 232, 233 mit ihren jeweiligen Kippachsen **234, 235** und **236, 237** weisen, wie am Beispiel des oberen Kippgelenks **232** gezeigt ist, zwei um 90° gegeneinander verdreht angeordnete, unterbrochene Federstege **238, 239** auf, die jeweils durch seitlich offene Schlitze **240, 241** gebildet sind. Die Schlitze 240 erstrecken sich ausgehend vom Federsteg 238 schräg nach oben und die Schlitze 241 ausgehend vom Federsteg 239 schräg nach unten. Die beiden Federgelenke 232, 233 sind identisch aufgebaut und bezüglich einer horizontalen Mittelebene des Lagerfußes 230 spiegelbildlich angeordnet. Um gußtechnischen Anforderungen Rechnung zu tragen, sind im Lagerfuß 230 Hohlräume **242** unterschiedlicher Gestalt vorgesehen. Entsprechend dem Lagerfuß 30 bildet der Lagerfuß 230 ein zweidimensionales Loslager.

Vorzugsweise wird das Aluminium-Gußteil mit Verbindungsstegen **250** ausgebildet, welche die Schlitze 240, 241 auf ihren den Federstegen gegenüberliegenden Schlitzenden jeweils überbrücken und daher ein Verkippen nicht möglich ist. Je nach gewünschter Lagerart kann durch nachträgliches Auftrennen von Verbindungsstegen 250, wie in Fig. 9 gezeigt, der Lagerfuß mit unterschiedlichen translatorischen Freiheitsgraden ausgestattet werden. Umgekehrt können translatorische Freiheitsgrade des Lagerfußes eingeschränkt werden, wenn bereits aufgetrennte Verbindungsstege wieder geschlossen bzw. verbunden werden.

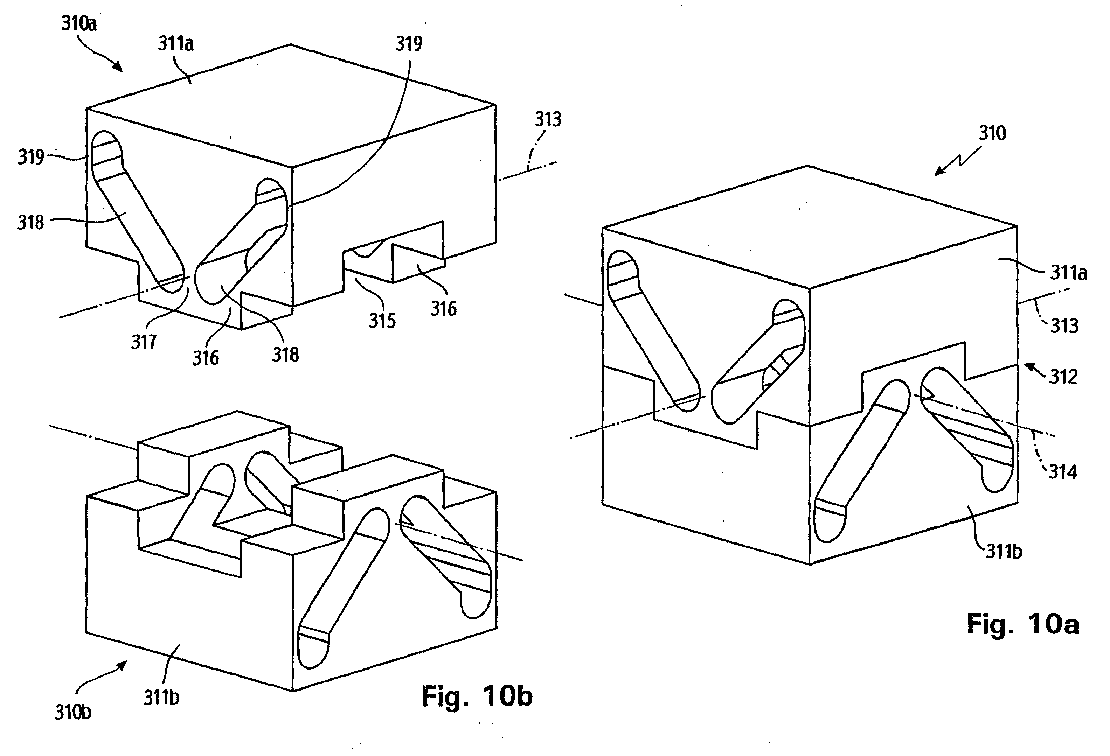

**Fig. 10a** zeigt einen Lagerfuß **310,** der aus zwei identischen Lagerfußhälften **310a, 310b** spiegelbildlich zu einer horizontalen Mittelebene zusammengesetzt ist. Diese Lagerfußhälften bilden jeweils einen Fußabschnitt **311a, 311b** und ergänzen sich zusammen zu einem allseitig kippbaren Federgelenk **312** mit zwei Kippachsen **313, 314**. Die beiden Lagerfußhälften 310a, 310b lassen sich besonders kostengünstig als Strangpreßprofile herstellen. Wie in **Fig. 10b** beispielhaft für die obere Lagerfußhälfte 310a gezeigt, umfaßt jede Lagerfußhälfte verbindungsseitig zwei durch eine durchgehende Aussparung **315** voneinander getrennte Vorsprünge **316.** In den Vorsprüngen 316 ist jeweils ein Federsteg **317** durch zwei Schlitze **318** gebildet, die ausgehend vom Federsteg 317 jeweils schräg nach oben verlaufen. Im dargestellten Ausführungsbeispiel sind die Schlitze 318 auf ihrer dem Federsteg 317 abgewandten Seite jeweils durch einen Verbindungssteg **319** noch geschlossen. Die beiden Lagerfußhälften 310a, 310b werden gegeneinander um 90° verdreht zusammengesetzt und miteinander verbunden, wobei die Vorsprünge 316 der einen Lagerfußhälfte in die Aussparungen 315 der anderen Lagerfußhälfte eingreifen und sich die beiden Lagerfußhälften 310a, 310b zu einem Würfel ergänzen. Nach Durchtrennen der Verbindungsstege 319 bildet der Lagerfuß 310 mit seinen beiden Kippachsen 313, 314 ein Festlager entsprechend dem Lagerfuß 10.

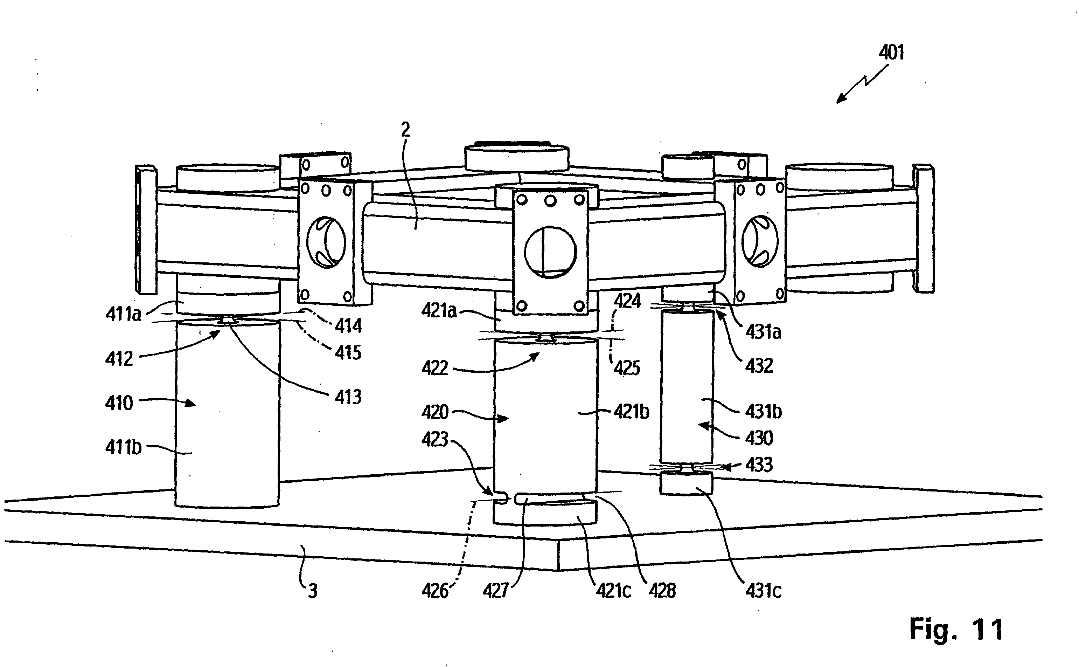

In **Fig. 11** ist eine weitere Lagervorrichtung **401** für einen quadratisch gefalteten Laserresonator mit drei massiven zylindrischen Lagerfüßen **410, 420, 430** gezeigt. Der einstückige Lagerfuß 410 entspricht funktionsmäßig einem Festlager, der einstükkige Lagerfuß 420 einem eindimensionalen Loslager und der einstückige Lagerfuß 430 einem zweidimensionalen Loslager.

Die beiden Fußabschnitte **411a, 411b** des Lagerfußes 410 sind über ein allseitig kippbares Federgelenk **412** miteinander einstückig verbunden, das durch einen runden zentralen Federsteg **413** mit einer gegenüber den Fußabschnitten **411a, 411b** jeweils radial nach innen zurückspringenden Außenkontur gebildet ist. Der obere Fußabschnitt 411a ist gegenüber dem unteren Fußabschnitt 411b um jede durch den Federsteg 413 gehende horizontale Achse und damit allseitig kippbar. Da sich jede beliebige Kippbewegung stets in Kippbewegungen um zwei unterschiedliche Kippachsen zerlegen läßt, sind exemplarisch zwei sich rechtwinklig schneidende Kippachsen **414, 415** dargestellt. Entsprechend dem Lagerfuß 10 bildet der Lagerfuß 410 mit seinen beiden Kippachsen 414, 415 das Festlager der Lagervorrichtung 401.

Der Lagerfuß 420 umfaßt ein allseitig kippbares oberes Federgelenk **422** und ein zweiseitig kippbares unteres Federgelenk **423**, welche die beiden Fußabschnitte **421a, 421b** und die beiden Fußabschnitte 421b, **421c** miteinander jeweils einstückig verbinden. Das Federgelenk 422 mit den beiden Kippachsen **424, 425** ist identisch dem Federgelenk 412 des Lagerfußes 410 aufgebaut. Die parallel zur Kippachse 424 verlaufende Kippachse **426** des zweiseitig kippbaren Federgelenks 423 ist durch einen durchgehenden Federsteg **427** definiert, der durch zwei horizontale, seitlich offene Schlitze **428** gebildet ist. Entsprechend dem Lagerfuß 20 bildet der Lagerfuß 420 das eindimensionale Loslager der Lagervorrichtung 401.

Der Lagerfuß 430 umfaßt ein oberes und ein unteres allseitig kippbares Federgelenk **432, 433,** welche zwei benachbarte Fußabschnitte **431a, 431b** bzw. 431b, **431c** miteinander jeweils einstückig verbinden. Die beiden Federgelenke 432, 433 sind identisch dem Federgelenk 412 bzw. 422 aufgebaut. Entsprechend dem Lagerfuß 30 bildet der Lagerfuß 430 das zweidimensionale Loslager der Lagervorrichtung 401.

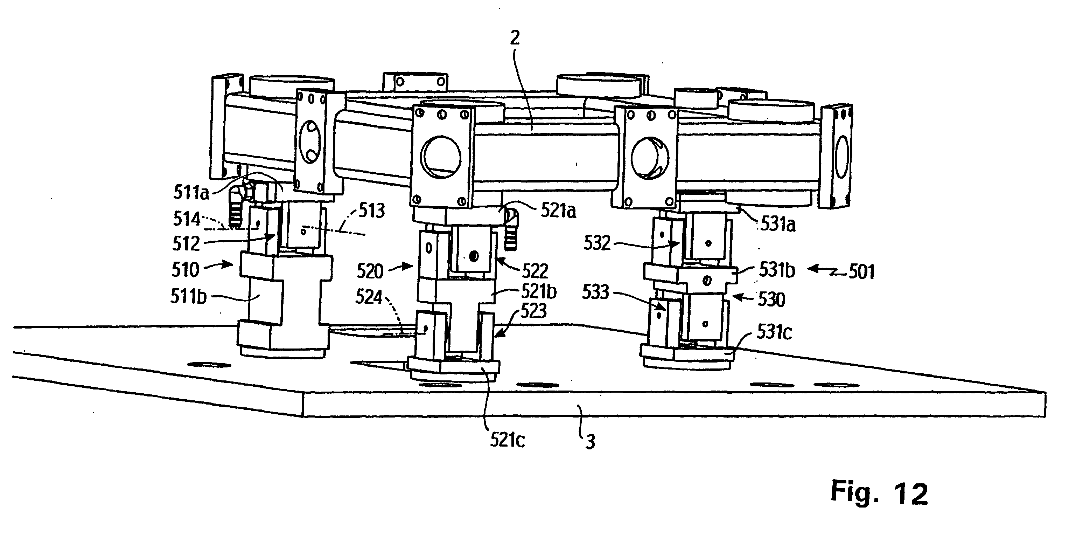

Die in **Fig. 12** gezeigte Lagervorrichtung **501**, die nicht Bestandteil der Erfindung ist, umfaßt drei mehrteilig aufgebaute Lagerfüße **510, 520, 530,** wobei der Lagerfuß 510 ein Festlager, der Lagerfuß 520 ein eindimensionales Loslager und der Lagerfuß 530 ein zweidimensionales Loslager bilden.

Der Lagerfuß 510 umfaßt einen oberen und unteren Fußabschnitt **511a, 511b,** die beide über ein Kardangelenk **512** miteinander verbunden sind. Die beiden Gelenkachsen des Kardangelenks 512 sind mit **513** und **514** bezeichnet. Entsprechend dem Lagerfuß 10 bildet der Lagerfuß 510 das Festlager der Lagervorrichtung 501.

Der Lagerfuß 520 umfaßt einen oberen und einen mittleren Fußabschnitt **521a, 521b,** die über ein identisch dem,Kardangelenk 512 aufgebautes Kardangelenk **522** miteinander verbunden sind, sowie einen unteren Fußabschnitt **521c,** der mit dem mittleren Fußabschnitt 521b über ein Gelenk **523** verbunden ist. Die Gelenkachse **524** dieses Gelenks 523 verläuft parallel zur einer der Gelenkachsen des Kardangelenks 522. Entsprechend dem Lagerfuß 20 bildet der Lagerfuß 520 das eindimensionale Loslager der Lagervorrichtung 501.

Der Lagerfuß 530 umfaßt drei Fußabschnitte **531a, 531b, 531c,** die über ein oberes und ein unteres Kardangelenk 532, 533 jeweils miteinander verbunden sind. Die Kardangelenke 532, 533 sind identisch dem Kardangelenk 512 bzw. 522 aufgebaut. Entsprechend dem Lagerfuß 30 bildet der Lagerfuß 530 das zweidimensionale Loslager der Lagervorrichtung 501.

Bei einem Lagerfuß 10 für einen Laserresonator sind benachbarte Fußabschnitte 11a, 11b jeweils unmittelbar über ein dazwischen vorgesehenes Kippgelenk 12 unverlierbar miteinander verbunden. Eine zusätzliche Höhensicherung am Lagerfuß ist nicht mehr erforderlich, da die beiden Fußabschnitte 11a, 11b durch das Kippgelenk 12 bereits höhengesichert aneinander gehalten sind.

## Patentansprüche

1. Lagerfuß (10, 20, 30; 110, 120, 130; 230; 310; 410, 420, 430), insbesondere für einen Laserresonator, mit mindestens zwei Fußabschnitten (11a, 11b; 21a, 21b, 21c; 31a, 31b, 31c; 111a, 111b; 121a, 121b, 121c; 131a, 131b, 131c; 231a, 231b, 231c; 311a, 311b; 411a, 411b; 421a, 421b, 421c; 431a,. 431b, 431c) und jeweils einem dazwischen vorgesehenen Kippgelenk (12; 22; 32, 33; 112, 122; 132, 133; 232, 233; 312; 412; 422; 432, 433),
sodaß benachbarte Fußabschnitte unmittebar über das mindestens eine Kippgelenk unverlierbar mit einander verbunden sind,
**dadurch gekennzeichnet,**
**daß** das mindestens eine Kippgelenk (12; 22; 32, 33; 112; 122; 132, 133; 232, 233; 312; 412; 422; 432, 433) als allseitig kippbares Federgelenk mit mindestens zwei gegeneinander, insbesondere um 90°, verdreht angeordneten Kippachsen (13, 14; 24, 25; 34, 35; 36, 37; 113, 114; 124, 125; 134, 135; 136, 137; 234, 235; 236, 237; 313, 314; 414, 415; 424, 425) ausgebildet ist.

2. Lagerfuß nach Anspruch 1, **dadurch gekennzeichnet, daß** benachbarte Fußabschnitte (11a, 11b; 21a, 21b; 31a, 31b, 31c; 111a, 111b; 121a, 121b; 131a, 131b, 131c; 231a, 231b, 231c; 411a, 411b; 421a, 421b; 431a, 431b, 431c) durch das Kippgelenk (12; 22; 32, 33; 112; 122; 132, 133; 232, 233; 412; 422; 432, 433) jeweils einstückig miteinander verbunden sind.

3. Lagerfuß nach Anspruch 1, **dadurch gekennzeichnet, daß** der Lagerfuß (310) aus mehreren Einzelteilen aufgebaut ist.

4. Lagerfuß nach Anspruch 3, **dadurch gekennzeichnet, daß** der Lagerfuß (310) aus zwei identischen Hälften (310a, 310b) zusammengesetzt ist.

5. Lagerfuß nach einem der vorhergehenden Ansprüche, **dadurch gekennzeichnet, daß** die beiden Kippachsen (13, 14; 24, 25; 34, 35; 36, 37; 113, 114; 124, 125; 134, 135; 136, 137; 234; 235; 236, 237; 313, 314; 414, 415; 424, 425) des Kippgelenks (12; 22; 32, 33; 112; 122; 132, 133; 232, 233; 312; 412; 422; 432, 433) in der gleichen Ebene angeordnet sind.

6. Lagerfuß nach einem der vorhergehenden Ansprüche, **dadurch gekennzeichnet, daß** das Kippgelenk (412; 422; 432, 433) einen zentralen Federsteg (413) aufweist, der gegenüber seinen benachbarten Fußabschnitten (411a, 411b; 421a, 421b; 431a, 431b, 431c) jeweils zurückspringt.

7. Lagerfuß nach einem der Ansprüche 1 bis 5, **dadurch gekennzeichnet, daß** die beiden Kippachsen (13, 14; 24, 25; 34, 35; 36, 37; 113, 114; 124, 125; 134, 135; 136, 137; 234, 235; 236, 237; 313, 314) des Kippgelenks (12; 22; 32, 33; 112; 122; 132, 133; 232; 233; 312) durch zwei gegeneinander, insbesondere um 90°, verdreht angeordnete, durchgehende oder unterteilte Federstege (15, 16; 115, 116; 238, 239; 317) gebildet sind.

8. Lagerfuß nach einem der vorhergenenden Ansprüche, **dadurch gekennzeichnet, daß** der Lagerfuß (20; 120; 420) zusätzlich ein zweiseitig kippbares Kippgelenk (23; 123; 423) aufweist, das vorzugsweise als Federgelenk mit mindestens einem die Kippachse (26; 126; 426) definierenden, durchgehenden oder unterteilten Federsteg (27; 127; 427) ausgebildet ist.

9. Lagerfuß nach einem der Ansprüche 1 bis 7, **dadurch gekennzeichnet, daß** der Lagerfuß (30; 130; 230; 430) zwei übereinander angeordnete, allseitig kippbare Federgelenke (32, 33; 132, 133; 232, 233; 432, 433) aufweist.

10. Lagerfuß nach einem der Ansprüche 7 bis 9, **dadurch gekennzeichnet, daß** ein Federsteg (15, 16; 27; 115, 116; 127; 238, 239; 317) durch zwei einander gegenüberliegende, seitlich offene Schlitze (18, 19; 28; 118, 119; 128; 240, 241; 318) gebildet ist.

11. Lagerfuß nach einem der vorhergehenden Ansprüche, **dadurch gekennzeichnet, daß** ein Kippgelenk (12; 22, 23; 32, 33; 112; 122, 123; 132, 133; 232, 233; 412; 422, 423; 432, 433) durch nachträgliches Öffnen von Verbindungsstegen (250) oder durch nachträgliches Schließen von seitlich offenen Schlitzen (18, 19; 28; 118, 119; 128; 240, 241; 318) herstellbar ist.

12. Lagerfuß nach einem der vorhergehenden Ansprüche, **dadurch gekennzeichnet, daß** der Lagerfuß (10, 20, 30; 110, 120, 130; 310; 410, 420, 430) massiv oder als Hohlkörper ausgebildet ist.

13. Lagerfuß nach einem der vorhergehenden Ansprüche, **dadurch gekennzeichnet, daß** der Lagerfuß (230) ein Gußteil ist.

14. Lagervorrichtung (1; 101; 401), insbesondere als Unterbau für einen Laserresonator, mit mindestens drei Lagerfüßen (10, 20, 30; 110, 120, 130; 230; 310; 410, 420, 430) nach einem oder mehreren der vorhergehenden Ansprüche.

15. Lagervorrichtung nach Anspruch 14, **gekennzeichnet durch** drei Lagerfüße (10, 20, 30; 110, 120, 130; 230; 310; 410, 420, 430), die jeweils auf gleicher Höhe ein allseitig kippbares Kippgelenk (12; 22; 32; 112; 122; 132; 232; 312; 412; 422; 432) haben, wobei ein Lagerfuß (20; 120; 420) zusätzlich ein zweiseitig kippbares Kippgelenk (23; 123; 423) und ein anderer Lagerfuß (30; 130; 230; 430) zusätzlich ein weiteres allseitig kippbares Kippgelenk (33; 133; 233; 433) aufweisen.

16. Lagervorrichtung nach Anspruch 14 oder 15, **dadurch gekennzeichnet, daß** die Lagerfüße (10, 20, 30; 110, 120, 130; 230; 410, 420, 430) aus jeweils identischen Grundkörpern einstückig gefertigt sind.

## Claims

1. Support base (10, 20, 30; 110, 120, 130; 230; 310; 410, 420, 430), in particular for a laser resonator, having at least two base portions (11a, 11b; 21a, 21b, 21c; 31a, 31b, 31c; 111a, 111b; 121a, 121b, 121c; 131a, 131b, 131c; 231a, 231b, 231c; 311a, 311b; 411a, 411b; 421a, 421b, 421c; 431a, 431b, 431c) and a tilting joint (12; 22; 32, 33; 112, 122; 132, 133; 232, 233; 312; 412; 422; 432, 433) which is provided therebetween in each case so that adjacent base portions are connected directly to each other unlosably by means of the at least one tilting joint,
**characterised in that**
the at least one tilting joint (12; 22; 32, 33; 112; 122; 132, 133; 232, 233; 312; 412; 422; 432, 433) is in the form of a universally tiltable resilient joint having at least two tilting axes (13, 14; 24, 25; 34, 35; 36, 37; 113, 114; 124, 125; 134, 135; 136, 137; 234, 235; 236, 237; 313, 314; 414, 415; 424, 425) which are arranged displaced relative to each other, in particular by 90°.

2. Support base according to claim 1, **characterised in that** adjacent base portions (11a, 11b; 21a, 21b; 31a, 31b, 31c; 111a, 111b; 121a, 121b; 131a, 131b, 131c; 231a, 231b, 231c; 411a, 411b; 421a, 421b; 431a, 431b, 431c) are each connected to each other integrally by the tilting joint (12; 22; 32, 33; 112; 122; 132, 133; 232, 233; 412; 422; 432, 433).

3. Support base according to claim 1, **characterised in that** the support base (310) is constructed from a plurality of individual elements.

4. Support base according to claim 3, **characterised in that** the support base (310) is composed of two identical halves (310a, 310b).

5. Support base according to any one of the preceding claims, **characterised in that** the two tilting axes (13, 14; 24, 25; 34, 35; 36, 37; 113, 114; 124, 125; 134, 135; 136, 137; 234; 235; 236, 237; 313, 314; 414, 415; 424, 425) of the tilting joint (12; 22; 32, 33; 112; 122; 132, 133; 232, 233; 312; 412; 422; 432, 433) are arranged in the same plane.

6. Support base according to any one of the preceding claims, **characterised in that** the tilting joint (412; 422; 432, 433) has a central resilient web (413) which is recessed relative to each of the adjacent base portions thereof (411a, 411b; 421a, 421b; 431a, 431b, 431c).

7. Support base according to any one of claims 1 to 5, **characterised in that** the two tilting axes (13, 14; 24, 25; 34, 35; 36, 37; 113, 114; 124, 125; 134, 135; 136, 137; 234, 235; 236, 237; 313, 314) of the tilting joint (12; 22; 32, 33; 112; 122; 132, 133; 232; 233; 312) are formed by two continuous or divided resilient webs (15, 16; 115, 116; 238, 239; 317) which are arranged displaced relative to each other, in particular by 90°.

8. Support base according to any one of the preceding claims, **characterised in that** the support base (20; 120; 420) further has a bilaterally tiltable tilting joint (23; 123; 423) which is preferably in the form of a resilient joint having at least one continuous or divided resilient web (27; 127; 427) which defines the tilting axis (26; 126; 426).

9. Support base according to any one of claims 1 to 7, **characterised in that** the support base (30; 130; 230; 430) has two universally tiltable resilient joints (32, 33; 132, 133; 232, 233; 432, 433) which are arranged one above the other.

10. Support base according to any one of claims 7 to 9, **characterised in that** a resilient web (15, 16; 27; 115, 116; 127; 238, 239; 317) is formed by two laterally open slots (18, 19; 28; 118, 119; 128; 240, 241; 318) opposite each other.

11. Support base according to any one of the preceding claims, **characterised in that** a tilting joint (12; 22, 23; 32, 33; 112; 122, 123; 132, 133; 232, 233; 412; 422, 423; 432, 433) can be produced by subsequent opening of connection webs (250) or by subsequent closing of laterally open slots (18, 19; 28; 118, 119; 128; 240, 241; 318).

12. Support base according to any one of the preceding claims, **characterised in that** the support base (10, 20, 30; 110, 120, 130; 310; 410, 420, 430) is constructed so as to be solid or as a hollow member.

13. Support base according to any one of the preceding claims, **characterised in that** the support base (230) is a cast element.

14. Support device (1; 101; 401), in particular in the form of a support for a laser resonator, having at least three support bases (10, 20, 30; 110, 120, 130; 230; 310; 410, 420, 430) according to any one or more of the preceding claims.

15. Support device according to claim 14, **characterised by** three support bases (10, 20, 30; 110, 120, 130; 230; 310; 410, 420, 430) which each have a universally tiltable tilting joint (12; 22; 32; 112; 122; 132; 232; 312; 412; 422; 432) at the same height, one support base (20; 120; 420) further having a bilaterally tiltable tilting joint (23; 123; 423) and another support base (30; 130; 230; 430) further having another universally tiltable tilting joint (33; 133; 233; 433).

16. Support device according to claim 14 or 15,
**characterised in that** the support bases (10, 20, 30; 110, 120, 130; 230; 410, 420, 430) are produced integrally from identical base members.

## Revendications

1. Support (10, 20, 30 ; 110, 120, 130 ; 230 ; 310 ; 410, 420, 430), adapté en particulier à un résonateur laser, avec au moins deux segments de support (11a, 11b, ; 21a, 21b, 21c ; 31a, 31b, 31c; 111a, 111b ; 121a, 121b, 121c ; 131a, 131b, 131c ; 231a, 231b, 231c; 311a, 311b, ; 411a, 411b ; 421a, 421b, 421c ; 431a, 431b, 431c) et une articulation à bascule (12 ; 22 ; 32, 33 ; 112, 122 ; 132, 133 ; 232, 233 ; 312 ; 412 ; 422 ; 432, 433) prévue respectivement entre eux pour que des segments de support avoisinants soient reliés entre eux de façon imperdable directement via la au moins une articulation à bascule
**caractérisé en ce**
**qu'**au moins une articulation à bascule (12 ; 22 ; 32, 33 ; 112, 122 ; 132, 133 ; 232, 233 ; 312 ; 412 ; 422 ; 432, 433) est réalisée sous forme d'articulation à ressort basculant de tous les côtés avec au moins deux axes de basculement (13, 14 ; 24, 25 ; 34, 35 ; 36, 37 ; 113, 114 ; 124, 125 ; 134, 135 ; 136, 137 ; 234, 235 ; 236, 237 ; 313, 314 ; 414, 415 ; 424, 425) disposés l'un tourné par rapport à l'autre, notamment d' un angle de 90°.

2. Support selon la revendication 1, **caractérisé en ce que** des segments de support avoisinants (11a, 11b, ; 21a, 21b; 31a, 31b, 31c ; 111a, 111b ; 121a, 121b ; 131a, 131b, 131c ; 231a, 231b, 231c ; 411a, 411b ; 421a, 421b ; 431a, 431b, 431c) sont reliés les uns aux autres par l'articulation à bascule (12 ; 22 ; 32, 33 ; 112, 122 ; 132, 133 ; 232, 233 ; 412 ; 422 ; 432, 433) de façon à former chaque fois une seule pièce.

3. Support selon la revendication 1, **caractérisé en ce que** le support (310) est construit de plusieurs pièces individuelles.

4. Support selon la revendication 3, **caractérisé en ce que** le support (310) est composé de deux moitiés (310a, 310b) identiques.

5. Support selon l'une quelconque des revendications précédentes, **caractérisé en ce que** les deux axes de basculement (13, 14 ; 24, 25 ; 34, 35 ; 36, 37 ; 113, 114 ; 124, 125 ; 134, 135 ; 136, 137 ; 234, 235 ; 236, 237 ; 313, 314 ; 414, 415 ; 424, 425) de l'articulation à bascule (12 ; 22 ; 32, 33 ; 112 ; 122 ; 132, 133 ; 232, 233 ; 312 ; 412 ; 422 ; 432, 433) sont disposés dans le même plan.

6. Support selon l'une quelconque des revendications précédentes, **caractérisé en ce que** l'articulation à bascule (412 ; 422 ; 432 ; 433) présente une traverse à ressort centrale (413) qui saute en arrière par rapport à ses segments de support avoisinants (411a, 411b ; 421a, 421b ; 431a, 431b, 431c) respectifs.

7. Support selon l'une quelconque des revendications 1 à 5, **caractérisé en ce que** les deux axes de basculement (13, 14 ; 24, 25 ; 34, 35 ; 36, 37 ; 113, 114 ; 124, 125 ; 134, 135 ; 136, 137 ; 234, 235 ; 236, 237 ; 313, 314) de l'articulation à bascule (12 ; 22 ; 32, 33 ; 112, 122 ; 132, 133 ; 232, 233 ; 312) sont formés par deux traverses à ressort continues ou subdivisées (15, 16 ; 115, 116 ; 238, 239 ; 317) disposées l'une tournée par rapport à l'autre, notamment d'un angle de 90°.

8. Support selon l'une quelconque des revendications précédentes, **caractérisé en ce que** le support (20 ; 120 ; 420) présente en outre une deuxième articulation à bascule (23 ; 123 ; 423) basculant de deux côtés, qui est de préférence réalisée sous forme d'articulation à ressort avec au moins une traverse à ressort continue ou subdivisée (27 ; 127 ; 427) définissant l'axe de basculement (26 ; 126 ; 426).

9. Support selon l'une quelconque des revendications 1 à 7, **caractérisé en ce que** le support (30 ; 130 ; 230 ; 430) présente deux articulations à ressort (32, 33 ; 132, 133 ; 232, 233 ; 432, 433) superposées, basculant de tous les côtés.

10. Support selon l'une quelconque des revendications 7 à 9, **caractérisé en ce qu'**une traverse à ressort (15, 16 ; 27 ; 115, 116 ; 127 ; 238, 239 ; 317) est formée par deux fentes ouvertes latéralement (18, 19 ; 28 ; 118, 119 ; 128 ; 240, 241 ; 318) opposées l'une à l'autre.

11. Support selon l'une quelconque des revendications précédentes, **caractérisé en ce qu'**une articulation à bascule (12 ; 22, 23 ; 32, 33 ; 112, 122, 123 ; 132, 133 ; 232, 233 ; 412 ; 422, 423 ; 432, 433) peut être fabriquée en ouvrant ultérieurement des traverses de liaison (250) ou en fermant ultérieurement des fentes ouvertes latéralement (18, 19 ; 28 ; 118, 119 ; 128 ; 240, 241 ; 318).

12. Support selon l'une quelconque des revendications précédentes, **caractérisé en ce que** le support (10, 20, 30 ; 110, 120, 130 ; 310, 410, 420, 430) est réalisé de façon massive ou sous forme de corps creux.

13. Support selon l'une quelconque des revendications précédentes, **caractérisé en ce que** le support (230) est une pièce coulée.

14. Dispositif de support (1 ; 101 ; 401), particulièrement en forme de châssis pour un résonateur laser, avec au moins trois supports (10, 20, 30 ; 110, 120, 130 ; 230 ; 310, 410, 420, 430) selon l'une ou plusieurs des revendications précédentes.

15. Dispositif selon la revendication 14, **caractérisé en ce que** trois supports (10, 20, 30 ; 110, 120, 130 ; 230 ; 310, 410, 420, 430) qui présentent tous une articulation à bascule (12 ; 22 ; 32 ; 112, 122 ; 132 ; 232 ; 312 ; 412 ; 422 ; 432) à une même hauteur qui basculent de tous les côtés, un support (20 ; 120 ; 420) présentant en outre une articulation à bascule (23 ; 123 ; 423) basculant de deux côtés et un autre support (30 ; 130 ; 230 ; 430) présentant en outre une autre articulation à bascule (33 ; 133 ; 233 ; 433) basculant de tous les côtés.

16. Dispositif selon la revendication 14 ou 15, **caractérisé en ce que** les supports (10, 20, 30 ; 110, 120, 130 ; 230 ; 410, 420, 430) sont chacun fabriqués en corps de base identiques faits d'une seule pièce.
